# DEMANDE DE BREVET EUROPEEN

(11) **EP 0 533 564 A1**
(43) Date de publication de la demande: **24.03.1993**
(21) Numéro de dépôt: 92402537.2
(22) Date de dépôt: 16.09.1992
(51) Int. Cl.: H01H 5/08, B60Q 1/14

(54) **Commutateur électrique perfectionné, notamment pour véhicules automobiles**

(30) Priorité: 17.09.1991 FR 9111428
(71) Demandeur: JAEGER, F-92000 Nanterre (FR)
(72) Inventeur: Touroude, Laurent, F-95870 Bezons (FR); Gauthier, Christian, F-92200 Neuilly sur Seine (FR)
(74) Mandataire: Martin, Jean-Jacques

(57) **Abrégé**

La présente invention concerne un commutateur électrique du type comprenant un boîtier (310), un organe de contrôle (320) porté à déplacement sur le boîtier, un organe de commande guidé dans le boîtier et entraîné par l'organe de contrôle, des moyens d'indexation (360) de l'organe de commande et des contacts électriques associés à l'organe de commande (340) caractérisé par le fait qu'il comprend un élément élastique (380) associé à l'organe de contrôle (320) et à l'organe de commande (340) de sorte que dans une phase initiale du déplacement de l'organe de contrôle (320), l'élément élastique (380) soit déformé et emmagasine de l'énergie, et que dans une phase ultérieure, les moyens d'indexation (360) autorisent un déplacement de l'organe de commande (340) et l'élément élastique (380) restitue l'énergie emmagasinée pour accélérer le déplacement de l'organe de commande (340).

## Description

La présente invention concerne le domaine des commutateurs électriques, notamment pour véhicules automobiles.

La présente invention concerne les commutateurs électriques du type comprenant :
- un boîtier,
- un organe de contrôle porté à déplacement sur le boîtier et accessible à l'extérieur de celui-ci pour être manoeuvré par un utilisateur,
- un organe de commande guidé à déplacement dans le boîtier et conçu pour être entraîné par le déplacement de l'organe de contrôle,
- des moyens d'indexation de l'organe de commande dans son déplacement, et
- des contacts électriques associés à l'organe de commande de sorte que l'état de liaison de ceux-ci soit modifié lors du déplacement de l'organe de commande.

De nombreux dispositifs du type précité ont déjà été proposés.

On peut par exemple se référer au document EP-A-0243252.

Le but de la présente invention est de perfectionner ces dispositifs connus en proposant des moyens permettant d'obtenir des phases d'établissement de contact et de rupture de contact plus courtes que selon la technique antérieure, c'est-à-dire un déplacement plus rapide des contacts électriques mobiles.

La présente invention a ainsi indirectement pour but de limiter l'étincelage entre les contacts électriques.

Ce but est atteint selon la présente invention, grâce à un dispositif du type précité, caractérisé par le fait qu'il comprend un élément élastique associé à l'organe de contrôle et à l'organe de commande de sorte que dans une phase initiale du déplacement de l'organe de contrôle, l'élément élastique soit déformé et emmagasine de l'énergie, et que dans une phase ultérieure du déplacement de l'organe de contrôle, les moyens d'indexation autorisent un déplacement de l'organe de commande et l'élément élastique restitue l'énergie emmagasinée pour accélérer le déplacement de l'organe de commande.

L'organe de contrôle et l'organe de commande peuvent être guidés à rotation ou à translation.

Selon une caractéristique avantageuse de l'invention, l'élément élastique est intercalé entre l'organe de contrôle et l'organe de commande.

Selon un premier mode de réalisation de l'invention, l'élément élastique est formé d'un barreau de torsion reliant l'organe de contrôle à l'organe de commande.

Selon un second mode de réalisation de l'invention, l'organe de contrôle et l'organe de commande sont formés de deux pièces séparées et l'élément élastique est intercalé entre eux.

Plus précisément, de préférence dans le cadre de ce second mode de réalisation, l'un de l'organe de contrôle et l'organe de commande comprend une chambre en secteur de couronne recevant l'élément élastique et dans laquelle débouchent deux rainures en secteurs de couronne, tandis que l'autre de l'organe de commande et l'organe de contrôle possède une fourchette à deux branches placées dans lesdites rainures pour solliciter l'élément élastique lors d'un déplacement relatif entre l'organe de contrôle et l'organe de commande.

Selon une autre caractéristique avantageuse de la présente invention, le commutateur comprend des moyens définissant une liaison indexée entre l'organe de commande et l'organe de contrôle avec débattement angulaire limité entre ceux-ci.

Selon une autre caractéristique avantageuse de la présente invention, le commutateur électrique comprend un ressort unique qui sollicite les moyens d'indexation de l'organe de commande et qui sollicite également les moyens définissant une liaison de commande et qui sollicite également les moyens définissant une liaison indexée entre l'organe de commande et l'organe de contrôle avec débattement angulaire limité entre ceux-ci.

Selon une autre caractéristique avantageuse de la présente invention, l'élément élastique sollicite un élément de l'organe de commande en appui sur l'organe de contrôle et sollicite simultanément un élément d'indexation en appui sur l'organe de commande.

Selon un troisième mode de réalisation de l'invention, le commutateur comprend :
- un boîtier,
- un organe de commande comprenant :
   . un arbre de commande guidé à rotation dans le boîtier,
   . un élément annulaire de commande engagé sur l'arbre de commande pour être lié à rotation avec cet arbre de commande tout en étant susceptible de translation par rapport à celui-ci,
- un organe de contrôle porté à rotation sur l'arbre de commande,
- des moyens définissant une liaison indexée entre l'élément annulaire de commande et l'organe de contrôle avec débattement angulaire limité entre ceux-ci,
- un élément d'indexation de l'élément annulaire de commande, lié à rotation avec le boîtier tout en étant libre de translation par rapport à celui-ci, et
- un élément élastique qui sollicite axialement l'élément d'indexation en appui sur l'élément annulaire de commande et sollicite ce dernier en appui sur l'organe de contrôle.

Selon une autre caractéristique avantageuse de l'invention, les moyens définissant une liaison indexée entre l'élément annulaire de commande et l'organe de contrôle comprennent d'une part au moins un dièdre concave d'indexage comportant deux faces principales symétriques d'un plan passant par l'axe de rotation de l'organe de contrôle et limité par deux flancs radiaux par rapport à cet axe, et d'autre part au moins un doigt qui repose sur le dièdre concave d'indexage entre les flancs de celui-ci.

Selon une autre caractéristique avantageuse de l'invention, les moyens d'indexation prévus entre l'élément d'indexation et l'élément annulaire de commande comprennent une série de dièdres concaves comportant chacun deux faces principales symétriques d'un plan passant par l'axe de rotation de l'organe de commande et au moins un doigt reposant sélectivement sur l'un des dièdres concaves.

Selon une autre caractéristique avantageuse de l'invention, l'inclinaison des faces principales d'indexation prévues entre l'élément d'indexation et l'élément annulaire de commande par rapport à un plan orthogonal à l'axe de rotation de l'organe de contrôle est supérieure à l'inclinaison des faces principales de la liaison indexée entre l'élément annulaire de commande et l'organe de contrôle par rapport au même plan orthogonal à l'axe de rotation.

Selon une autre caractéristique avantageuse de l'invention, l'organe de commande est guidé à rotation sur le boîtier et il porte un doigt généralement radial par rapport à l'axe de rotation et conçu pour déplacer un tiroir porte-contact.

D'autres caractéristiques, buts et avantages de la présente invention apparaîtront à la lecture de la description détaillée qui va suivre et en regard des dessins annexés donnés à titre d'exemples non limitatifs et sur lesquels :
- la figure 1 représente une vue schématique en coupe axiale-longitudinale d'un dispositif conforme à un premier mode de réalisation de la présente invention,
- la figure 2 représente une vue partielle en coupe transversale, selon le plan de coupe référencé II-II sur la figure 1, du même dispositif conforme au premier mode de réalisation de la présente invention,
- la figure 3 représente une vue schématique en coupe axiale-longitudinale d'un dispositif conforme à un second mode de réalisation de la présente invention,
- la figure 4A représente une vue en coupe transversale du même dispositif conforme au second mode de réalisation de la présente invention, selon le plan de coupe référencé IV-IV sur la figure 3,
- la figure 4B représente, selon une vue en coupe transversale similaire à la figure 4A, un dispositif conforme à une autre variante de réalisation de la présente invention,
- la figure 5 représente une vue schématique en coupe axiale-longitudinale d'un dispositif conforme à un troisième mode de réalisation de la présente invention,
- les figures 6 à 13 représentent diverses vues en coupe transversale du même dispositif conforme au troisième mode de réalisation de la présente invention, selon les plans de coupe référencés VI, VII, VIII, IX, X, XI, XII et XIII sur la figure 5,
- les figures 14 et 15 représentent des vues en coupe développée correspondant aux coupes référencées XIV et XV sur la figure 5, parallèles à l'axe du dispositif,
- la figure 16 représente une vue schématique en perspective, boîtier éclaté, du dispositif conforme au troisième mode de réalisation de la présente invention, et
- les figures 17, 18, 19 et 20 représentent schématiquement l'état de liaison de contacts électriques, la position de moyens définissant une liaison indexée entre l'organe de commande et l'organe de contrôle, et la position de moyens d'indexation de l'organe de commande à diverses phases successives, d'un processus de commutation.

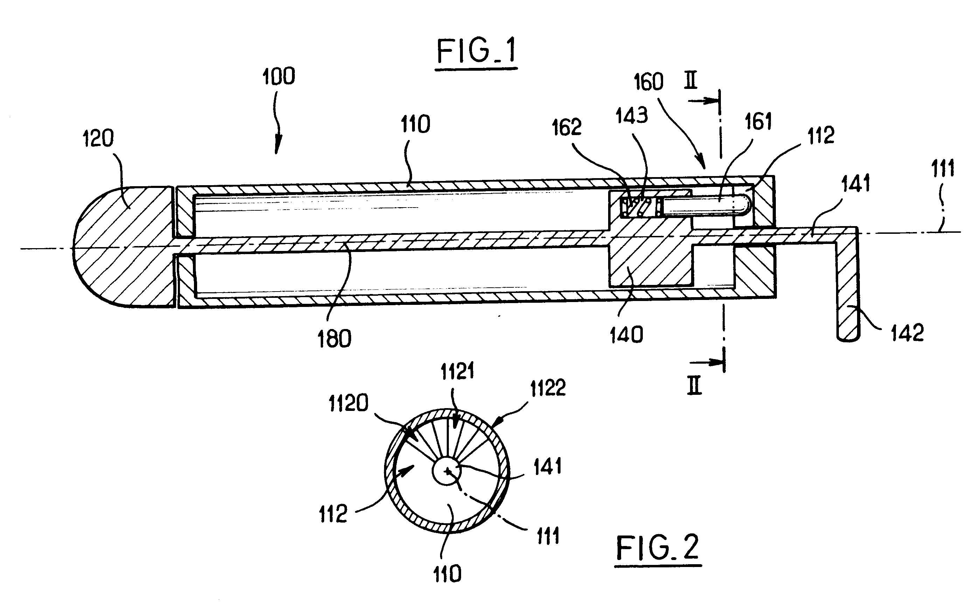

On va tout d'abord décrire le premier mode de réalisation 100 conforme à la présente invention représenté sur les figures 1 et 2 annexées.

Le dispositif 100 conforme à ce premier mode de réalisation comprend essentiellement :
- un boîtier 110,
- un organe de contrôle 120,
- un organe de commande 140,
- des moyens d'indexation 160, et
- un élément élastique 180.

Le boîtier 110 est généralement cylindrique et allongé, centré sur un axe 111.

L'organe de contrôle 120 est formé d'un bouton centré sur cet axe 111. Le bouton 120 est placé sur une extrémité du boîtier 110 à l'extérieur de celui-ci afin d'être accessible à un utilisateur en vue d'une manoeuvre de rotation autour de l'axe 111.

L'organe de commande 140 comprend un bloc en forme générale de disque cylindrique placé dans le boîtier 110 et centré autour de l'axe 111.

L'élément élastique 180 est formé d'un barreau cylindrique centré sur l'axe 111 et à souplesse contrôlée. Le barreau 180 forme un barreau de torsion. Il est intercalé entre l'organe de contrôle 120 et l'organe de commande 140.

Ainsi, l'organe de contrôle 120, l'organe de commande 140 et l'élément élastique 180 sont guidés à rotation autour de l'axe 111.

L'organe de commande 140 est prolongé, sur sa face opposée à l'élément élastique 180 par un arbre rigide 141, cylindrique, centré sur l'axe 111. L'arbre 141 porte lui-même à son extrémité libre opposée à l'organe de commande 140, un doigt 142 radial par rapport à l'axe 111.

Ainsi, le déplacement à rotation de l'organe de contrôle 120 autour de l'axe 111, déplace l'élément de commande 140 et par conséquent l'arbre 141 et le doigt radial 142 à rotation autour du même axe 111, par l'intermédiaire de l'élément élastique 180.

Le déplacement du doigt 142 peut être utilisé pour modifier l'état de liaison de contacts électriques associés, de façon connue en soi.

Pour cette raison, les contacts électriques précités n'ont pas été représentés sur les figures annexées.

A titre d'exemple non limitatif, le doigt 142 peut être en prise avec un tiroir monté à translation perpendiculairement à l'axe 111 et perpendiculairement au plan de la figure 1. Un tel tiroir est conçu pour modifier l'état de liaison de contacts électriques, lors de son déplacement.

Pour bien comprendre la coopération ainsi définie entre le doigt 142, le tiroir et les contacts électriques associés, on pourra se référer utilement au document EP-0243252.

Cependant, comme indiqué précédemment, les moyens d'indexation 160 contrôlent le déplacement de l'organe de commande 140.

Les moyens d'indexation 160 peuvent faire l'objet de nombreux modes de réalisation.

Selon le mode de réalisation préférentiel représenté sur la figure 1, ces moyens d'indexation 160 comprennent au moins un plot 161 placé dans une chambre borgne 143 formée dans l'élément de commande 140 parallèlement à l'axe 111. Un ressort 162 placé dans le fond de la chambre 143 sollicite le plot 161 vers l'extérieur de celle-ci, contre des rampes d'indexation 112 portées par le boîtier 110. Les rampes d'indexation 112 sont placées sur une face transversale du boîtier 110 dirigée vers l'élément de commande 140.

A titre d'exemple non limitatif, les rampes d'indexation 112 peuvent comprendre trois dièdres concaves 1120, 1121, 1122, visibles sur la figure 2. Ainsi, le plot 161 définit trois positions stables pour l'élément de commande 140, lorsqu'il passe d'un dièdre précité à l'autre.

Cependant, grâce à la présence de l'organe élastique 180, l'élément de commande 140 n'est pas lié rigidement à l'élément de contrôle 120. De ce fait, l'élément de commande 140 ne suit pas instantanément le déplacement de l'organe de contrôle 120.

La rigidité de l'élément élastique 180 et du ressort 162 sont telles que lors d'une sollicitation de l'élément de contrôle 120, l'élément élastique 180 soit déformé élastiquement avant que le ressort 162 n'autorise le passage d'un dièdre 112 au dièdre adjacent.

Le fonctionnement du dispositif représenté sur les figures 1 et 2 est essentiellement le suivant.

Dans une phase initiale du déplacement de l'organe de contrôle 120, l'élément élastique 180 est déformé par torsion élastique autour de l'axe 111 et emmagasine de l'énergie. Au cours de cette phase initiale, l'élément de commande 140 est immobilisé par le doigt d'indexation 161.

Lorsque la rigidité de l'élément 180, suite à sa torsion, est telle que l'effort exercé par l'élément 180 sur l'organe de commande 140 devient supérieur à l'effort exercé par le ressort 162 sur l'organe de commande 140, le plot 161 monte sur une rampe des dièdres 112.

Dans une phase ultérieure, lorsque le plot 161 franchit le point haut d'une rampe, soit le sommet entre deux dièdres adjacents 1120 et 1121 ou 1121 et 1122, il autorise un déplacement de l'élément de commande 140 indexé en regard du dièdre adjacent. L'élément de commande 140 étant alors momentanément libéré, l'élément élastique 180 restitue l'énergie emmagasinée pour accélérer le déplacement de l'organe de commande 140 et par conséquent du doigt 142 vers la nouvelle position indexée par le plot 161. Le déplacement des contacts électriques associés au doigt 142 est par conséquent accéléré également.

Bien entendu, on peut inverser la disposition des moyens d'indexation. C'est-à-dire que l'on peut prévoir un doigt d'indexation sur le boîtier et une rampe d'indexation sur l'organe de commande.

Le barreau de torsion 180 formant l'élément élastique peut être réalisé en tout matériau approprié, par exemple en métal ou en matière plastique.

Il peut être réalisé unitaire avec l'organe de contrôle 120 et/ou l'organe de commande 140. Cependant, il peut aussi être encastré à l'une au moins de ses extrémités dans l'un des organes précités 120 et 140.

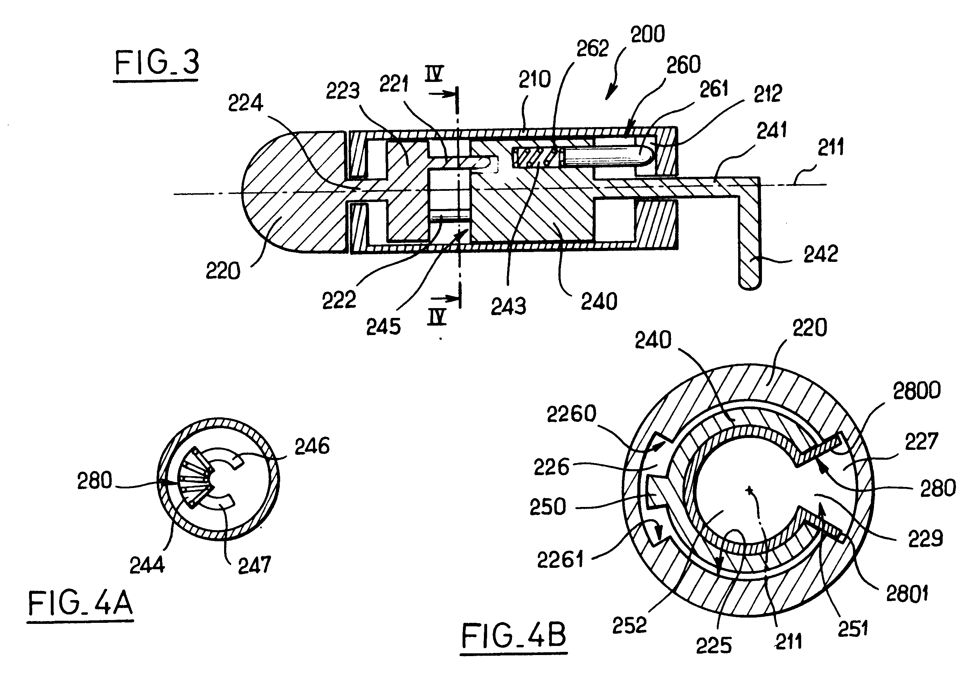

On va maintenant décrire le second mode de réalisation 200 conforme à la présente invention représenté sur les figures 3 et 4A annexées.

Ce second mode de réalisation 200 comprend essentiellement :
- un boîtier 210,
- un organe de contrôle 220,
- un organe de commande 240,
- des moyens d'indexation 260, et
- un élément élastique 280.

De façon comparable au premier mode de réalisation, le boîtier 210 représenté sur les figures 3 et 4A annexées, est généralement cylindrique et allongé, centré sur un axe 211.

L'organe de contrôle 220 est formé d'un bouton centré sur l'axe 211 et accessible à l'extérieur du boîtier 210 en vue d'une manoeuvre par un utilisateur.

L'organe de commande 240 est formé d'un bloc en forme de disque cylindrique placé dans le boîtier 210 et centré sur l'axe 211. L'organe de commande 240 est prolongé sur sa face opposée à l'organe de contrôle 120 par un arbre 241 rigide centré sur l'axe 211. L'arbre 241 porte à son extrémité un doigt 242 radial par rapport à l'axe 211. Le doigt est conçu pour commander des contacts électriques comme indiqué précédemment en regard des figures 1 et 2. L'organe de commande 240 est ainsi susceptible de rotation autour de l'axe 211.

Toutefois, le déplacement de l'organe de commande 240 autour de l'axe 211 est contrôlé par les moyens d'indexation 260.

La structure des moyens d'indexation 260 représentés sur les figures 3 et 4A est identique à la structure des moyens d'indexation 160 précités en regard des figures 1 et 2. Pour cette raison, les moyens d'indexation 260 ne seront pas décrits dans le détail par la suite.

On indiquera cependant que les moyens d'indexation 260 comprennent au moins un plot 261 placé dans une chambre borgne 243 de l'organe de commande 240 et sollicité par un ressort 262 contre des rampes d'indexation 212 formées sur le boîtier 210. Les rampes d'indexation 212 peuvent être formées par exemple de trois dièdres concaves comme représenté sur la figure 2.

Bien entendu, on peut prévoir de placer le plot d'indexation 261 sur le boîtier 210 et les rampes d'indexation 212 associées sur l'organe de commande 240.

Selon le second mode de réalisation représenté sur les figures 3 et 4A, l'élément élastique 280 est placé dans une chambre 244 de l'organe de commande 240. La chambre 244 débouche sur la face avant 245 de l'organe de commande 240, c'est-à-dire sur la face de celui-ci dirigée vers l'organe de contrôle 220.

L'élément élastique 280 est sollicité par une fourchette portée par l'organe de contrôle 220. La fourchette précitée comprend deux branches 221, 222 visibles sur la figure 3. Ces branches 221, 222 sont parallèles entre elles et parallèles à l'axe 211. Les branches 221, 222 sont portées par la face arrière d'un disque 223 lui-même lié à l'organe de contrôle 220 par un arbre rigide 224 centré sur l'axe 211.

L'élément élastique 280 est formé en l'espèce d'un ressort, par exemple hélicoïdal, placé dans la chambre 244. Plus précisément, cette chambre 244 est formé d'un secteur de couronne centré sur l'axe 211. En outre, deux rainures 246, 247 en forme de secteurs de couronne centrés sur l'axe 211 débouchent dans la chambre 244, sur les extrémités opposées de celles-ci. Les rainures 246, 247 présentent une extension radiale plus faible que la chambre 244. L'extension radiale des rainures 246, 247 est sensiblement complémentaire du diamètre des branches 221, 222 de la fourchette liée à l'organe de contrôle 220.

Par ailleurs, la distance séparant les deux branches 221, 222 de la fourchette précitée est sensiblement égale à la distance séparant les extrémités de la chambre 244.

Ainsi au repos, les branches 221, 222 de la fourchette précitée sont situées dans les rainures 246, 247, sur l'extérieur de la chambre 244. Le ressort 280 n'est pas sollicité.

Lorsque l'organe de contrôle 220 est entraîné à rotation, l'une des branches 221 ou 222, selon le sens de rotation considéré, pénètre dans la chambre 244 et sollicite le ressort 280 à la compression. On notera que, dans cette phase initiale, l'organe de commande 240 est immobilisé par le plot d'indexation 261.

Le ressort 280 est ainsi comprimé entre l'une des extrémités de la chambre 244 et la branche 221 ou 222 précitée de la fourchette portée par l'organe de contrôle 220.

Au cours de cette phase initiale, le ressort 280 est comprimé progressivement et emmagasine de l'énergie.

Lorsque l'effort exercé par le ressort 280 sur l'organe de commande 240 devient supérieur à l'effort de réaction exercé par le plot 261, ce dernier se déplace sur l'une des rampes 212.

Lorsque le plot 261 franchit le point haut de la rampe considérée, l'organe de commande 240 est libéré et le ressort 280 restitue alors l'énergie emmagasinée pour accélérer le déplacement de l'organe de commande 240 et par conséquent des contacts électriques associés.

On va maintenant décrire la variante du second mode de réalisation représentée sur la figure 4B.

Sur cette figure 4B, on aperçoit, vus en coupe transversale, l'organe de contrôle 220 et l'organe de commande 240.

L'organe de contrôle 220 a la forme d'un cylindre creux centré sur l'axe 211. La chambre interne de l'organe de contrôle 220 est référencé 229. Ce cylindre possède, sur sa surface interne 225, deux rainures 226, 227, centrées sur l'axe 211 et possédant des ouvertures angulaires respectives B et C, typiquement de l'ordre de 70°. Les deux rainures 226, 227 sont de préférence diamétralement opposées par rapport à l'axe 211.

L'organe de commande 240 comprend un fourreau cylindrique centré sur l'axe 211 et placé dans la chambre interne 229 de l'organe de contrôle 220. Le fourreau de commande et l'organe de contrôle 220 sont coaxiaux. Le diamètre externe de l'organe de commande 240 est légèrement inférieur au diamètre interne de la chambre 229 pour autoriser une rotation de l'organe de contrôle 220 par rapport à l'organe de commande 240 autour de l'axe 211.

L'organe de commande 240 possède sur sa surface externe 248, un doigt en saillie 250 placé dans la rainure 226. Ainsi une liaison à rotation entre l'organe de contrôle 220 et l'organe de commande 240 est obtenue lorsque le doigt 250 repose sur l'un des flancs latéraux 2260 ou 2261, de la rainure 226.

Par ailleurs, l'organe de commande 240 possède une fenêtre longitudinale 251 placée en regard de la rainure 227.

La chambre interne de l'organe de commande 240 est référencée 252.

Cette chambre 252 reçoit un ressort 280.

Il s'agit d'un ressort 280 à lame en anneau ouvert, ou en hélice possédant deux extrémités 2800 et 2801 radiales vers l'extérieur et engagées dans la rainure 227. Le ressort 280 est préarmé.

Le dispositif représenté sur la figure 4B opère de la même façon que celui représenté sur la figure 4A.

Lorsque l'organe de contrôle 220 est entraîné à rotation, le ressort 280 est sollicité entre l'un des flancs de la rainure 227 et un flanc opposé de la fenêtre 251 formé sur l'organe de commande 240.

Lorsque le doigt 250 vient reposer sur l'un des flancs latéraux 2260, 2261, de la rainure 226, l'organe de commande 240 est entraîné à rotation.

Le plot d'indexation 261 se déplace alors sur l'une des rampes 212.

Lorsque le plot 261 franchit le point haut de la rampe considérée, l'organe de commande 240 est libéré et le ressort 280 restitue alors l'énergie emmagasinée pour accélérer le déplacement de l'organe de commande 240 et par conséquent des contacts électriques associés.

La position de l'organe de contrôle 220 et de l'organe de commande 240 peut être inversée. C'est-à-dire que l'élément référencé 220 sur la figure 4B peut constituer un organe de commande, tandis que l'élément référencé 240 sur la figure 4B constitue un organe de contrôle.

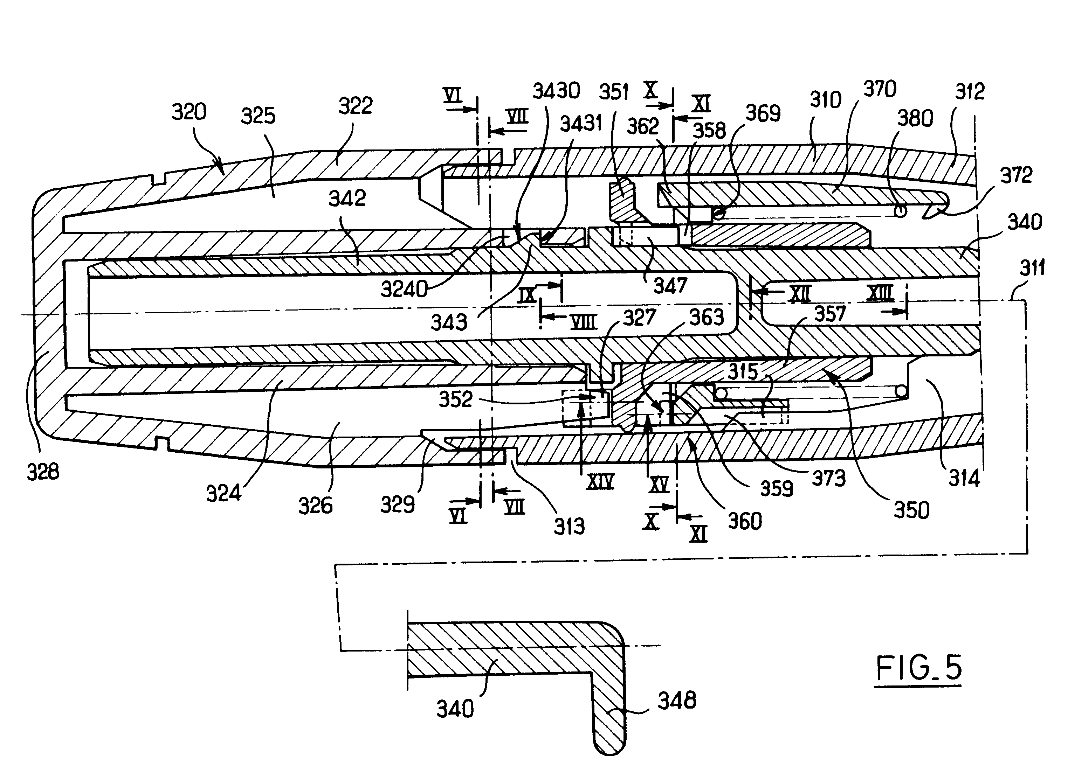

On va maintenant décrire le troisième mode de réalisation 300 conforme à la présente invention représenté sur les figures 5 à 20.

Le commutateur électrique conforme au troisième mode de réalisation 300 représenté sur les figures 5 à 20 comprend essentiellement :
- un boîtier 310,
- un organe de contrôle 320,
- un organe de commande 340,
- des moyens d'indexation 360, et
- un élément élastique 380.

Dans la suite de la description, l'expression "avant" sera utilisée pour qualifier l'extrémité des éléments du commutateur la plus proche de l'organe de contrôle 320, et inversement l'expression "arrière" sera utilisée pour désigner l'extrémité des éléments du commutateur la plus éloignée de l'organe de contrôle 320.

Le boîtier 310 a la forme générale d'un cylindre allongé centré sur un axe 311.

De préférence, le boîtier 310 est effilé en 312, à son extrémité arrière, en éloignement de l'organe de contrôle 320.

Le boîtier 310 peut être fixé sur un corps de commutateur par tout moyen classique approprié. Le cas échéant, le boîtier 310 peut être articulé sur le corps de commutateur pour assurer diverses fonctions électriques lors du pivotement du boîtier 310 autour de l'articulation précitée.

L'organe de contrôle 320 est formé d'un bouton engagé sur l'extrémité avant du boîtier 310. L'organe de contrôle 320 est guidé à rotation autour de l'axe 311 sur l'organe de commande 340.

L'organe de contrôle 320 comprend essentiellement une jupe externe 322 et une jupe interne 324, reliées entre elles d'une part, par diverses nervures de raidissement longitudinales 325, 326 et par une paroi d'extrémité avant 328 transversale à l'axe 311.

La jupe externe 322 est plus courte que la jupe interne 324.

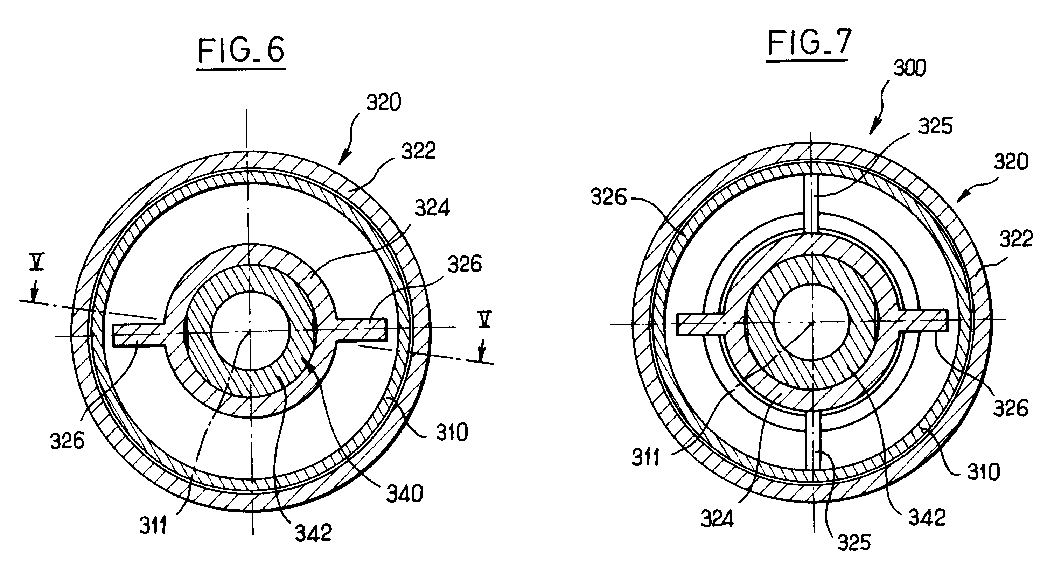

Selon le mode de réalisation particulier représenté sur les figures annexées, en particulier sur la figure 7, il est prévu quatre nervures de raidissement 325, 326 équi-réparties autour de l'axe 311. Ces nervures de raidissement sont parallèles à l'axe 311 et orientées radialement par rapport à celui-ci.

Il est ainsi prévu deux nervures de raidissement 325 diamétralement opposées par rapport à l'axe 311. Ces nervures 325 ont une longueur inférieure à la jupe externe 322.

Par ailleurs, il est prévu deux autres nervures de raidissement 326 diamétralement opposées entre elles par rapport à l'axe 311 et orthogonales aux nervures 325 précitées. Les nervures de raidissement 326 ont une longueur légèrement supérieure à la jupe interne 324, de sorte qu'elles émergent sur l'extrémité arrière de celle-ci, comme cela est visible sur la figure 5.

Les jupes 322 et 324 sont coaxiales entre elles et centrées sur l'axe 311.

La jupe externe 322 possède de préférence un rayon externe égal au rayon externe du boîtier 310. Le cas échéant, la jupe externe 322 peut être affilée en direction de son extrémité avant.

Il est prévu de préférence une découpe 329 entre la jupe externe 322 et les nervures de raidissement 326 de sorte que la jupe 322, puisse être engagée, par son extrémité arrière, sur la périphérie extérieure de l'extrémité avant du boîtier 310, plus précisément dans un décrochement 313 prévu à l'avant du boîtier 310.

La jupe interne 324 est engagée sur l'extrémité avant d'un arbre 342 appartenant aux moyens de commande 340. L'arbre 342 est un arbre cylindrique centré sur l'axe 311.

L'arbre 342 possède deux dents 343, 344 diamétralement opposées par rapport à l'axe 311. Les dents 343, 344 font saillie sur la surface extérieure de l'arbre 342. Par ailleurs, la jupe interne 324 possède deux lumières 3240, 3241 aptes à recevoir élastiquement par incliquetage les dents 343, 344 prévues sur l'arbre. Ainsi, la coopération définie entre les dents 343, 344 et les lumières 3240, 3241 interdit tout déplacement axial relatif entre l'organe de contrôle 320 et l'arbre 342.

Plus précisément, comme représenté sur la figure 5, les dents 343, 344 possèdent un bord avant 3430 d'engagement incliné par rapport à un plan perpendiculaire à l'axe 311 et un bord arrière d'arrêt 3431 perpendiculaire à l'axe 311. Le bord d'engagement 3430 facilite la pénétration des dents 343, 344 dans les lumières 3240, 3241, par déformation élastique. La surface d'arrêt 3431 arrière sert de butée axiale à l'organe de contrôle 320.

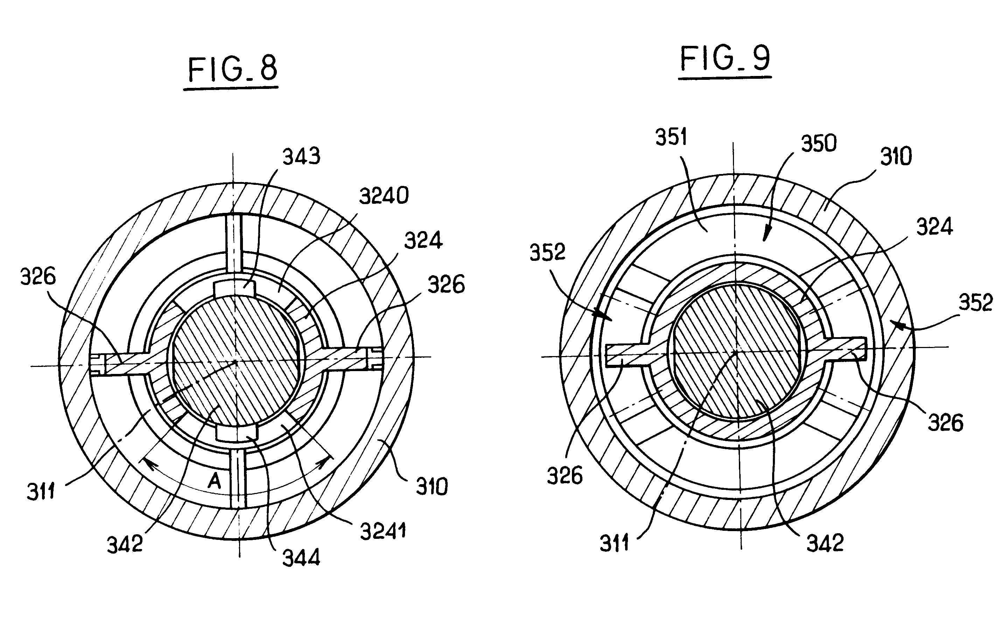

Cependant, l'organe de contrôle 320 est guidé à rotation autour de l'axe 311 sur l'extrémité avant de l'arbre 342. Pour cela, l'enveloppe externe de l'extrémité avant de l'arbre 342 est généralement complémentaire de la surface interne de la jupe interne 324. En outre, les lumières 3240, 3241 autorisent un débattement angulaire autour de l'axe 311 entre l'arbre 342 et l'organe de contrôle 320. Pour cela, l'ouverture angulaire référencée A sur la figure 8, des lumières 3240, 3241 est supérieure à l'ouverture angulaire des dents 343, 344.

A titre d'exemple non limitatif, l'ouverture angulaire A des lumières 3240, 3241, peut être supérieure d'environ 90° à l'ouverture angulaire des dents 343, 344 pour autoriser un pivotement de l'ordre de 90°, de l'organe de commande 320, par rapport à l'arbre 342.

L'arbre 342 est lui-même libre de rotation autour de l'axe 311 par rapport au boîtier 310. L'arbre 342 est par contre lié à translation avec le boîtier 310.

Des moyens de commande 340 comprennent en outre un élément annulaire 350 engagés sur la périphérie externe de l'arbre 342 dans le boîtier 310.

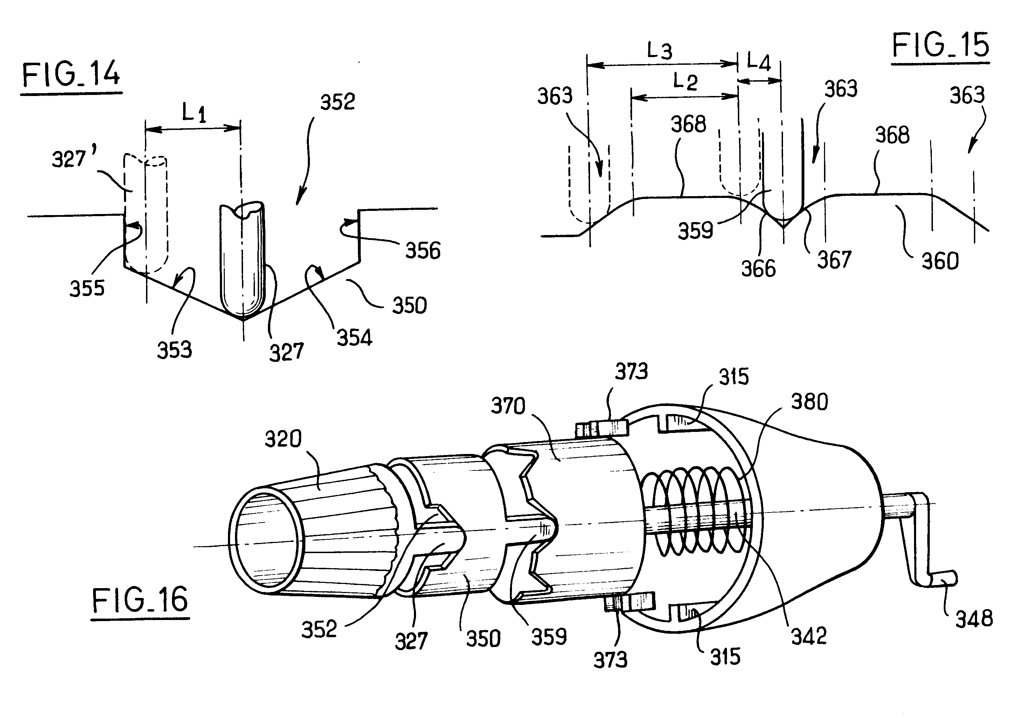

L'élément 350 comprend un anneau 351 centré sur l'axe 311. La face avant de l'anneau 351 définit des rampes 352 sur lesquelles reposent les extrémités arrières 327 des nervures 326 prévues sur l'organe de contrôle 320. Comme représenté en vue axiale sur la figure 9, il peut être ainsi prévu deux rampes 352, diamétralement opposées par rapport à l'axe 311, sur la face avant de l'anneau 351, pour coopérer respectivement avec chacune des deux nervures 326. Comme représenté sur la figure 14, les rampes 352 sont formées de préférence chacune d'un dièdre concave vers l'organe de contrôle 320. Chaque dièdre concave est formé de deux faces 353, 354, planes de préférence, symétriques par rapport à un plan axial passant par l'axe 311 et deux faces latérales 355, 356 parallèles à l'axe 311 et orientées généralement radialement par rapport à celui-ci.

A titre d'exemple non limitatif, l'inclinaison des faces 353, 354 par rapport à un plan orthogonal à l'axe 311 est de l'ordre de 25°. L'inclinaison des faces 353, 354 entre elles, est donc typiquement de l'ordre de 130°. Le débattement angulaire autorisé des extrémités arrières 327 des nervures 326, entre les faces latérales 355, 356, est inférieur à celui autorisé entre les dents 343, 344 et les lumières 3240, 3241.

Par la suite, on appellera "L1" la moitié de ce débattement autorisé pour les doigts 327 entre les faces 355, 356.

L'ouverture L1 est donc égale au débattement autorisé pour un doigt 327 entre la position de repos, représenté en traits pleins sur la figure 14, dans laquelle le doigt 327 repose sur le fond de la rampe 352, soit au niveau de la zone de jonction entre les faces 353, 354, et une position de travail, représenté en traits interrompus sur la figure 14, dans laquelle le doigt 327 repose sur une face latérale 355 ou 356.

L'élément annulaire 350 comprend en outre un manchon 357 engagé sur l'arbre 342. Le manchon 357 s'étend vers l'arrière, à partir de l'anneau 351. Le manchon 357 comprend au moins une rainure longitudinale 358 parallèle à l'axe 311 qui reçoit une nervure 347 portée par l'arbre 342. La coopération ainsi définie entre la nervure 347 et la rainure 358 définit une liaison à rotation entre l'élément annulaire 350 et l'arbre 342, tout en autorisant une possibilité de translation selon l'axe 311 entre ceux-ci.

Les moyens d'indexation 360 comprennent un élément annulaire 362 engagé sur la périphérie extérieure du manchon 357 et qui coopére avec l'élément élastique 380.

La face avant de l'élément 362 définit des rampes d'indexage 363 pour l'élément de commande 340, plus particulièrement pour l'élément annulaire 350.

Plus précisément, il est de préférence prévu, sur la face avant de l'élément 362, plusieurs séries de rampes d'indexage comprenant elles-mêmes plusieurs dièdres concaves équi-répartis autour de l'axe 311.

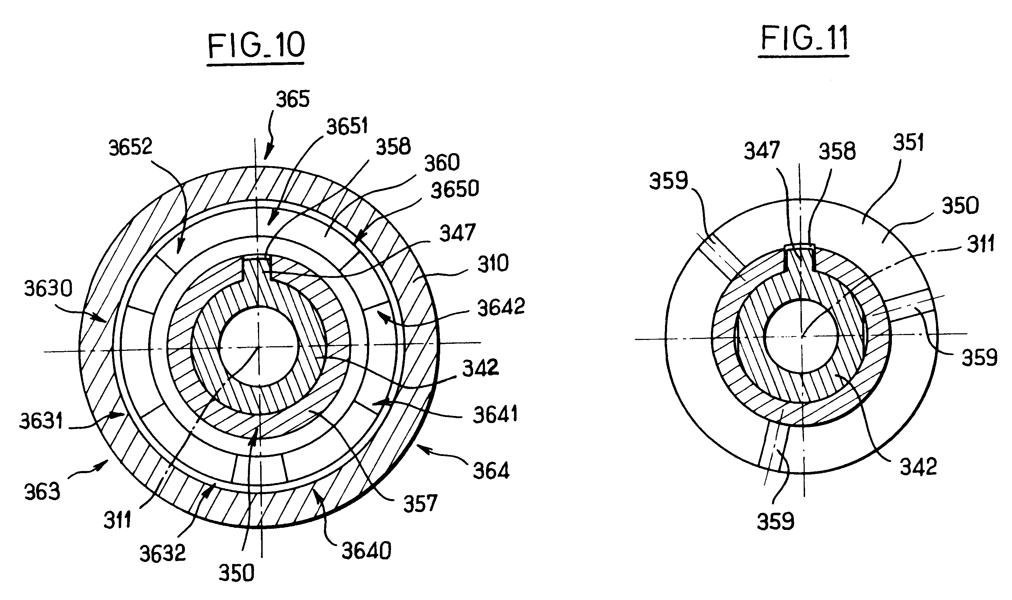

Selon le mode de réalisation particulier représenté sur la figure 10, il est ainsi prévu, sur la face avant de l'élément 362, trois séries 363, 364 et 365 de rampes équi-réparties autour de l'axe 311 et comprenant chacune trois dièdres concaves 3630, 3631, 3632, 3640, 3641, 3642, 3650, 3651, 3652. Les dièdres sont de préférence identiques.

Chaque dièdre 3630 à 3652 est défini essentiellement par deux faces planes 366, 367 symétriques par rapport à un plan axial passant par l'axe 311 comme représenté sur la figure 15. Les différents dièdres concaves 3630 à 3652 sont séparés par des faces planes 368 orthogonales à l'axe 311.

La présence de ces faces planes 368, orthogonales à l'axe 311, entre différents dièdres concaves 3630 à 3652 a pour but de garantir que l'initiation du déplacement rapide des contacts électriques soit obtenue avant qu'un contact électrique mobile n'échappe à un contact électrique fixe sur lequel il repose antérieurement, et ce de façon symétrique, c'est-à-dire quel que soit le sens de rotation de l'organe de contrôle 320.

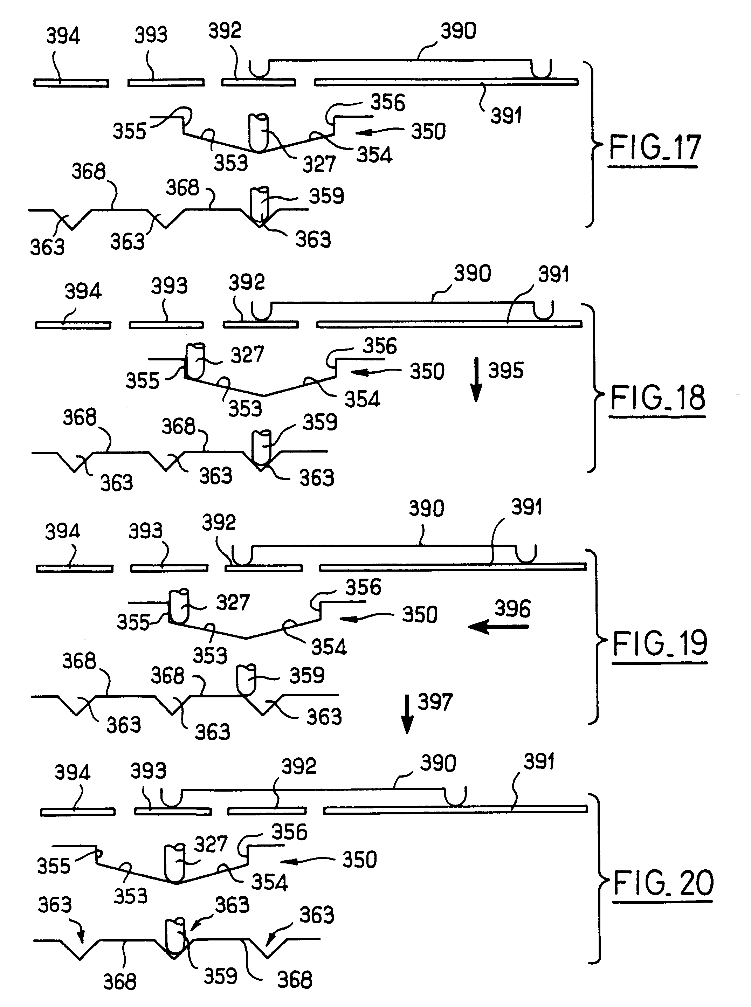

Ceci sera explicité par la suite en regard des figures 17 à 20.

Sur la figure 15, on a référencé "L2" l'ouverture angulaire des faces planes 368 et on a référencé "L3" le débattement d'un doigt 359 entre le point haut d'un dièdre d'indexation 363 et le point bas du dièdre d'indexation adjacent.

Dans le cadre de la présente invention, pour obtenir un fonctionnement satisfaisant, on choisit de préférence L3 > L1 ≧ L2.

L'inclinaison des faces 366, 367 des différents dièdres concaves 3630 à 3652 prévus sur la face avant de l'élément 362, par rapport à un plan orthogonal à l'axe 311 est supérieure à l'inclinaison précitée des faces 353, 354 prévues sur la face avant de l'élément 350.

L'inclinaison des faces 366, 367 d'indexage par rapport à un plan orthogonal à l'axe 311 est typiquement de l'ordre de 35°, l'inclinaison des faces 366, 367 entre elle est donc de l'ordre de 110°.

L'élément 351 possède sur sa face arrière un nombre de doigts 359 égal au nombre de série de rampes d'indexage 363, 364, 365 prévues sur la face avant de l'élément 360. En l'espèce, il est ainsi prévu trois doigts 359 sur la face arrière de l'élément 359 (voir figure 11). Les doigts 359 sont orientés sensiblement parallèlement à l'axe 311.

L'organe élastique 380 est engagé sur l'arrière de l'élément annulaire 362. Plus précisément, l'organe élastique 380 est formé de préférence d'un ressort hélicoïdal engagé entre la face arrière 369 de l'élément annulaire 362 et des nervures 314 prévues en saillie sur la surface interne du boîtier 310 à proximité de l'extrémité arrière de celui-ci. Le ressort 380 entoure le manchon 357 de l'organe 350 et l'arbre 342.

Ainsi le ressort 380 qui prend appui sur le boîtier 310 sollicite l'élément d'indexation 360 vers l'avant en appui contre les doigts d'indexation 359 de l'élément 350, et indirectement sollicite cet élément 350 vers l'avant en appui sur les doigts 327 prévus à l'arrière de l'organe de contrôle 320.

Le ressort 380 est maintenu, avant montage, sur l'élément d'indexation 360, grâce à trois bras 370 équi-répartis autour de l'axe 311.

Les bras 370 s'étendent longitudinalement, parallèlement à l'axe 311, sur l'arrière de l'élément annulaire 362. En outre, les bras 370 sont munis à leur extrémité arrière d'un crochet 372 dirigé vers l'axe 311. Ainsi, avant montage, le ressort 380 est maintenu entre la face arrière 369 de l'élément annulaire 362 et les crochets 372.

La distance axiale séparant la face arrière 369 de l'élément annulaire 362 et les crochets 372 est supérieure à la distance séparant après montage la face arrière 369 de l'élément annulaire 362 et la face avant des nervures 314 prévues sur le boîtier 310.

Ainsi après engagement de l'élément 360 dans le boîtier 310, les crochets 372 ne sont plus fonctionnels et le ressort 380 vient reposer sur les nervures 314.

L'élément d'indexation 360 est lui-même immobilisé à rotation sur le boîtier 310.

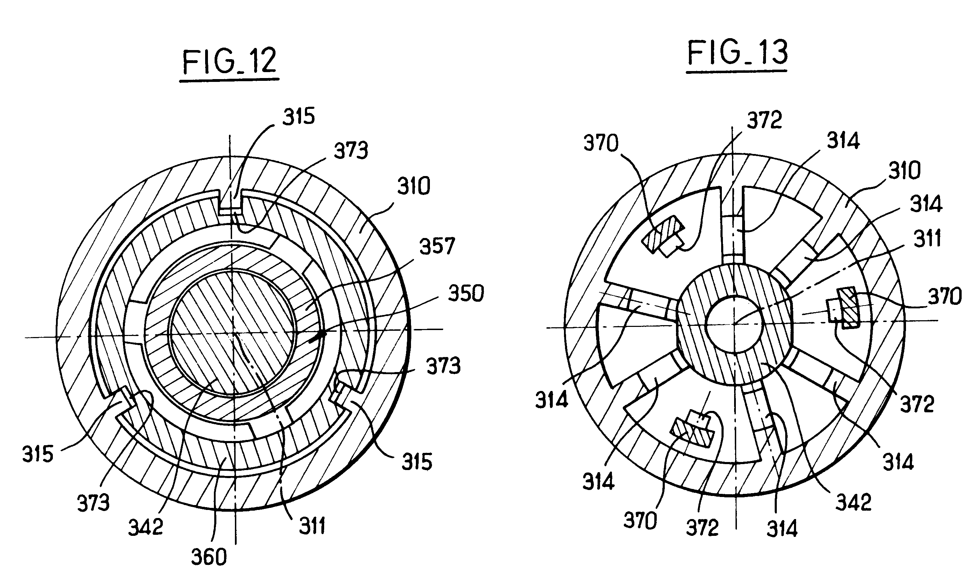

Pour cela, on peut prévoir par exemple des nervures longitudinales solidaires de l'élément 360 engagées dans des rainures complémentaires formées sur le boîtier 310, ou inversement des rainures longitudinales 373 prévues sur l'élément 360 recevant des nervures complémentaires longitudinales 315 prévues sur le boîtier (voir figure 12). Selon la figure 12, il est prévu trois nervures 315 et trois nervures 373. Ce nombre n'est pas limitatif.

Pour assembler le commutateur électrique conforme à la présente invention représenté sur les figures 5 à 20 annexées, on procède comme suit.

L'élément annulaire 350 est engagé sur l'arbre 342, par l'extrémité arrière de celui-ci. L'élément 350 est immobilisé à rotation sur l'arbre 342 lorsque la nervure 347 pénètre dans la rainure 358. En parallèle, l'élément 360 équipé du ressort 380 est engagé dans le boîtier 310. L'élément 360 est immobilisé à rotation par rapport au boîtier 310 lorsque les nervures 315 au boîtier pénètrent dans les rainures complémentaires 373.

L'arbre 342 équipé de l'élément 350 peut alors être engagé dans le boîtier 310. Les doigts 359 sont ainsi portés en appui contre les rampes d'indexage 363, 364, 365. Il reste alors à engager l'organe de contrôle 320 sur l'extrémité avant de l'arbre 342 en veillant à placer les extrémités 327 des nervures 326 en regard des rampes 352. Le verrouillage du dispositif est obtenu lorsque les dents 343, 344 sont engagées dans les lumières 3240, 3241.

Une fois cet assemblage obtenu, l'organe de contrôle 320 reste libre de débattement angulaire par rapport à l'arbre 342 selon l'amplitude autorisée par les lumières 3240, 3241 pour les dents 343, 344.

Toutefois, l'organe de contrôle 320 et l'organe intermédiaire de commande 350 sont maintenus en position indexée, grâce à la sollicitation du ressort 380.

Comme indiqué précédemment, l'élément de commande 340 peut commander les contacts électriques selon toute disposition connue appropriée.

Pour cela de préférence, l'extrémité arrière de l'arbre 342 est munie d'un doigt 348 généralement radial par rapport à l'axe 311 et conçu pour déplacer un tiroir porte-contact (voir figure 5). La représentation du doigt 348, donnée sur la figure 5, n'est bien entendu que schématique et non limitative.

On va maintenant décrire le fonctionnement du dispositif conforme au troisième mode de réalisation de la présente invention.

Cette description sera faite notamment en regard des figures 17 à 20.

Sur chacune de ces figures 17 à 20, on a représenté sur une première ligne, la position d'un plot ou pont de contact 390, en matériau électriquement conducteur, porté par le tiroir précité entraîné par le doigt 348, pour relier sélectivement une lame de contact principale 391 à l'une de plusieurs lames de contact secondaires 392, 393, 394 (le nombre de lames de contact secondaires 392, 393, 394 étant égal au nombre de positions stables indexées de l'organe de commande 340, définies par les rampes 363) ; sur une seconde ligne, la position des doigts 327 et des rampes 352 associées ; et sur une troisième ligne, la position des doigts 359 et des rampes 363 associées. Les lames secondaires 392, 393 et 394 sont de préférence de largeur identique et disposées selon un pas constant.

Les figures 17 à 20 correspondent à diverses phases successives d'un processus de commutation, comme indiqué précédemment.

En position d'origine, comme représenté sur la figure 17, le pont de contact 390 relie la lame de contact principale 391 et la lame de contact secondaire 392. Les doigts 327 reposent sur le fond ou point bas des rampes 352. De même, les doigts 359 reposent sur le fond ou point bas des rampes 363.

Lorsque l'organe de contrôle 320 est entraîné à rotation autour de l'axe 311, les doigts 327 prévus à l'extrémité arrière de l'organe de contrôle 320 sollicitent les rampes 353, 354 prévues sur l'élément 350. Dans la phase initiale de cette sollicitation, l'organe 350 reste immobile à rotation par rapport au boîtier 310 en raison de l'indexation définie par les doigts 359 reposant sur une rampe 363. On rappelle en effet que l'élément 360 d'indexation est lié à rotation avec le boîtier 310. La sollicitation des faces 353, 354 prévues sur l'organe 350 par l'organe de contrôle 320 entraîne par conséquent un recul de l'organe 350 (schématisé par la flêche 395 sur la figure 18) et une compression de l'organe 380 puisque l'organe de contrôle 320 est lié à translation avec l'arbre 342. Au cours de cette sollicitation, les doigts 327 glissent sur les faces d'indexage associés 353, 354.

On rappelle par ailleurs que l'immobilisation initiale à rotation de l'élément 350 est due au fait que les rampes 363 prévues sur l'élément d'indexation 360 exercent sur l'élément 350 un effort résistant supérieur à l'effort moteur des doigts 327 puisque l'inclinaison des faces 366, 367 de l'élément d'indexation 360, par rapport à un plan normal à l'axe 311 est supérieure à l'inclinaison des faces 353, 354 prévues sur l'élément 350 par rapport à un plan normal au même axe 311.

Cette phase de fonctionnement se poursuit jusqu'à ce que les doigts 327 prévus sur l'organe de contrôle 320 viennent en appui contre l'un des flancs latéraux 355, 356 prévus sur l'élément 350 comme représenté sur la figure 18.

On obtient alors un entraînement positif de l'élément 350 autour de l'axe 311. Dans la suite de la rotation de l'élément 320, l'élément 350 est alors déplacé à rotation autour de l'axe 311 (ceci est schématisé par la flêche 396 sur la figure 19) et les doigts d'indexation 359 de l'élément 350 sont forcés à déplacement vers l'extérieur des dièdres définis par les faces 366, 367, par glissement sur ceux-ci.

Les doigts d'indexation 359 montent alors progressivement sur ces faces 366, 367. Plus précisément, l'élément d'indexation 360 recule progressivement dans le boîtier, comme schématisé par la flêche 397 sur la figure 19 tandis que l'élément 350 est entraîné à rotation.

L'élément 350 étant lié à rotation avec l'arbre de commande 342, le pont de liaison 390 est simultanément déplacé sur les lames 391, 392, comme cela apparaît à l'examen comparé des figures 18 et 19.

Dès que les doigts d'indexage 359 atteignent le sommet des dièdres 363, c'est-à-dire qu'ils atteignent les faces planes 368, l'élément 350 est libéré. Ce dernier est alors accéléré dans sa rotation grâce à la précompression du ressort 380 qui entraîne une sollicitation des rampes 353, 354 par les doigts 327.

Une nouvelle position stable de l'élément 350 est obtenue lorsque les doigts 359 viennent reposer dans le fond de nouvelles rampes d'indexage 363.

On évite que les doigts 359 ne franchissent les rampes d'indexage 363 adjacentes à celles utilisées précédemment en choisissant L3 > L1. On garantit cependant un passage rapide d'une lame de contact secondaire à l'autre en choisissant L1 ≧ L2. Un tel passage rapide peut être obtenu d'ailleurs même si L1 est légèrement inférieur à L2 tout étant de son ordre de grandeur si les pièces mobiles du dispositif possèdent une inertie suffisante.

Les éléments 350 et 360 sont déplacés à translation vers l'avant. Les doigts 327 retrouvent leur position d'origine dans le fond des rampes 352.

Lors de la rotation accélérée de l'élément 350, le pont 390 est passé de la lame de contact secondaire 392 à la lame de contact secondaire 393.

La position obtenue est représentée sur la figure 20.

A partir de celle-ci le pont 390 peut être ramené dans la position d'origine représentée sur la figure 17 en entraînant l'organe de contrôle 320 à rotation dans le sens inverse, ou le pont 390 peut être déplacé sur la lame de contact secondaire 394 en poursuivant la rotation de l'organe de contrôle 320.

De préférence, les moyens d'entraînement du pont de liaison 390 sont choisis de sorte que lorsque les doigts 359 sont déplacés sur une ouverture angulaire L4, du fond des rampes 363 sur un sommet de celles-ci (voir figure 15), le pont de liaison 390 soit déplacé sur une amplitude inférieure à la moitié de la largeur des lames secondaires 392, 393, 394. Ainsi on évite que le pont 390 n'échappe à la lame secondaire 392 avant que le déplacement rapide de l'organe de commande 340 ne soit atteint. Par ailleurs, ces moyens d'entraînement de pont de liaison 390 sont choisis de sorte que :
- d'une part, le pont de liaison 390 soit déplacé du milieu d'une lame secondaire 392 au milieu de la lame secondaire adjacente 393 lorsque les doigts 359 sont déplacés d'une lame 363 à la rampe 363 adjacente,
- d'autre part, le pont de liaision 390 soit déplacé du milieu d'une lame secondaire 392 sur la lame secondaire adjacente 393 lorsque l'élément 350 est entraîné à rotation sur une course angulaire L1.

Là encore, comme dans les deux premiers modes de réalisation représentés sur les figures 1 à 4, on obtient par conséquent une accélération des phases d'ouverture et de fermeture de contact grâce à la précompression de l'élément élastique 380.

On notera que dans le cadre du troisième mode de réalisation représenté sur les figures 5 à 20 annexées, il est prévu un ressort unique 380 qui sollicite les moyens d'indexation 359, 363 de l'organe de commande 350 et qui sollicite également les moyens 327, 352 définissant une liaison indexée entre l'organe de commande 350 et l'organe de contrôle 320 avec débattement angulaire limité entre ceux-ci.

De ce fait le tarage du ressort 380 ne nécessite pas une grande précision, puisqu'il n'influence pas directement le fonctionnement du dispositif. Il suffit que l'inclinaison des faces 366, 367 des dièdres 3630 à 3652 prévus sur la face avant de l'élément 362, par rapport à un plan orthogonal à l'axe 311, soit supérieure à l'inclinaison des faces 353, 354 prévues sur la face avant de l'élément 350, comme indiqué précédemment, pour que le dispositif fonctionne correctement, c'est-à-dire que l'élément 350 ne commence à être entraîné à rotation autour de l'axe 311, qu'après mise en contact du doigt 327 avec un flanc 355 à 356.

Bien entendu la présente invention n'est pas limitée aux modes de réalisation particuliers qui viennent d'être décrits mais s'étend à toutes variantes conformes à son esprit.

Par exemple, on peut prévoir d'inverser les dispositions des dents 343, 344 et des lumières 3240, 3241, en plaçant les dents sur l'organe de contrôle 320 et les lumières correspondantes sur l'arbre 342.

De même, on peut prévoir d'inverser les dispositions des doigts 327 et des rampes 352 en plaçant les rampes 352 sur l'extrémité arrière de l'organe de contrôle 320 et les doigts sur l'extrémité avant de l'organe 350.

La liaison à rotation entre l'arbre 342 et l'élément 350 peut être inversée en plaçant des nervures 347 sur l'organe de contrôle 350 et des rainures 358 complémentaires sur l'arbre 342.

La disposition des rampes d'indexage 363 et des doigts d'indexage 359 peut être inversée. Les rampes d'indexage 359 peuvent être prévues sur l'arrière de l'organe 350 et les doigts d'indexage 359 complémentaires prévus sur la face avant de l'élément annulaire 360.

Par ailleurs, selon le mode de réalisation représenté sur les figures annexées, le commutateur électrique conforme à la présente invention utilise un organe de contrôle et un organe de commande déplacés à rotation. L'invention pourra cependant aisément être adaptée par l'homme de l'art à des commutateurs électriques utilisant un organe de contrôle et un organe de commande déplacés à translation.

Le commutateur qui vient d'être décrit peut être utilisé par exemple, pour commander la mise en service des feux d'éclairage d'un véhicule automobile. Les trois positions stables d'indexage définis par les dièdres concaves 1120, 1121, 1122; 3630, 3631, 3632; 3640, 3641, 3642; 3650, 3651, 3652 sont utilisées par exemple pour définir respectivement une position hors service des feux, une position de mise en service des lanternes et une position de mise en service des feux de croisement.

## Revendications

1. Commutateur électrique du type comprenant :
- un boîtier (110, 210, 310),
- un organe de contrôle (120, 220, 320) porté à déplacement sur le boîtier et accessible à l'extérieur de celui-ci pour être manoeuvré par un utilisateur,
- un organe de commande (140, 240, 340) guidé à déplacement dans le boîtier et conçu pour être entraîné par le déplacement de l'organe de contrôle,
- des moyens d'indexation (160, 260, 360) de l'organe de commande dans son déplacement, et
- des contacts électriques associés à l'organe de commande (140, 240, 340) de sorte que l'état de liaison de ceux-ci soit modifié lors du déplacement de l'organe de commande,
caractérisé par le fait qu'il comprend un élément élastique (180, 280, 380) associé à l'organe de contrôle (120, 220, 320) et à l'organe de commande (140, 240, 340) de sorte que dans une phase initiale du déplacement de l'organe de contrôle (120, 220, 320), l'élément élastique (180, 280, 380) soit déformé et emmagasine de l'énergie, et que dans une phase ultérieure, du déplacement de l'organe de contrôle (120, 220, 320), les moyens d'indexation (160, 260, 360) autorisent un déplacement de l'organe de commande (140, 240, 340) et l'élément élastique (180, 280, 380) restitue l'énergie emmagasinée pour accélérer le déplacement de l'organe de commande.

2. Commutateur électrique selon la revendication 1, caractérisé par le fait que l'organe de contrôle (120, 220, 320) et l'organe de commande (140, 240, 340) sont guidés à rotation.

3. Commutateur électrique selon la revendication 1, caractérisé par le fait que l'organe de contrôle (120, 220, 320) et l'organe de commande (140, 240, 340) sont guidés à translation.

4. Commutateur électrique selon l'une des revendications 1 à 3, caractérisé par le fait que l'élément élastique (180, 280) est intercalé entre l'organe de contrôle (120, 220) et l'organe de commande (140, 240).

5. Commutateur électrique selon la revendication 4, caractérisé par le fait que l'élément élastique (180) est formé d'un barreau de torsion reliant l'organe de contrôle (120) à l'organe de commande (140).

6. Commutateur électrique selon la revendication 4, caractérisé par le fait que l'organe de contrôle (220) et l'organe de commande (240) sont formés de deux pièces séparées et que l'élément élastique (280) est intercalé entre eux.

7. Commutateur électrique selon la revendication 6, caractérisé par le fait que l'un de l'organe de contrôle (220) et l'organe de commande (240) comprend une chambre (244) en secteur de couronne recevant l'élément élastique (280) et dans laquelle débouchent deux rainures (246, 247) en secteurs de couronne, tandis que l'autre de l'organe de commande (240) et l'organe de contrôle (220) possède une fourchette à deux branches (221, 222) placées dans lesdites rainures (246, 247) pour solliciter l'élément élastique (280) lors d'un déplacement relatif entre l'organe de contrôle (220) et l'organe de commande (240).

8. Commutateur électrique selon la revendication 6, caractérisé par le fait que l'organe de contrôle (220) et l'organe de commande (240) possèdent deux parties coaxiales, la partie interne possédant une chambre (252) possédant une fenêtre longitudinale (251) et recevant un élément élastique (280) du type en anneau ouvert ou en hélice possédant deux extrémités (2800, 2801) radiales vers l'extérieur, qui émergent par la fenêtre longitudinale (251) et pénètrent dans une rainure (227) formée dans la partie externe.

9. Commutateur électrique selon l'une des revendications 1 à 3, caractérisé par le fait qu'il comprend des moyens (327, 352) définissant une liaison indexée entre l'organe de commande (340) et l'organe de contrôle (320) avec débattement angulaire limité entre ceux-ci.

10. Commutateur électrique selon l'une des revendications 1 à 3 et 9, caractérisé par le fait qu'il comprend un ressort unique (380) qui sollicite les moyens d'indexation (359, 363) de l'organe de commande (340) et qui sollicite également des moyens (327, 352) définissant une liaison indexée entre l'organe de commande (340) et l'organe de contrôle (320) avec débattement angulaire limité entre ceux-ci.

11. Commutateur électrique selon l'une des revendications 1 à 3, 9 et 10, caractérisé par le fait que l'élément élastique (380) sollicite un élément (350) de l'organe de commande (340) en appui sur l'organe de contrôle et sollicite simultanément un élément d'indexation (360) en appui sur l'organe de commande (340).

12. Commutateur électrique selon l'une des revendications 1 à 3 et 9 à 11, caractérisé par le fait qu'il comprend :
- un boîtier (310),
- un organe de commande (340) comprenant :
. un arbre de commande (342) guidé à rotation dans le boîtier (310),
. un élément annulaire (350) de commande engagé sur l'arbre de commande (342) pour être lié à rotation avec cet arbre de commande tout en étant susceptible de translation par rapport à celui-ci,
- un organe de contrôle (320) porté à rotation sur l'arbre de commande (340),
- des moyens (327, 352) définissant une liaison indexée entre l'élément annulaire de commande (350) et l'organe de contrôle (320) avec débattement angulaire limité entre ceux-ci,
- un élément (360) d'indexation de l'élément annulaire de commande (350), lié à rotation avec le boîtier (310) tout en étant libre de translation par rapport à celui-ci, et
- un élément élastique (380) qui sollicite axialement l'élément d'indexation (360) en appui sur l'élément annulaire de commande (350) et sollicite ce dernier (350) en appui sur l'organe de contrôle (320).

13. Commutateur électrique selon la revendication 12, caractérisé par le fait que les moyens définissant une liaison indexée entre l'élément annulaire de commande (350) et l'organe de contrôle (320) comprennent d'une part au moins un dièdre concave d'indexage (352) comportant deux faces principales (353, 354) symétriques d'un plan passant par l'axe (311) de rotation de l'organe de contrôle (220) et limité par deux flancs (355, 356) radiaux par rapport à cet axe (311), et d'autre part au moins un doigt (327) qui repose sur le dièdre concave d'indexage (352) entre les flancs de celui-ci.

14. Commutateur électrique selon l'une des revendications 12 et 13, caractérisé par le fait que les moyens d'indexation prévus entre l'élément d'indexation (360) et l'élément annulaire de commande (350) comprennent une série de dièdres concaves (363) comportant chacun deux faces principales (366, 367) symétriques d'un plan passant par l'axe (311) de rotation de l'organe de commande et au moins un doigt (359) reposant sélectivement sur l'un des dièdres concaves (363).

15. Commutateur électrique selon les revendications 13 et 14 prises en combinaison, caractérisé par le fait que l'inclinaison des faces principales (366, 367) d'indexation prévues entre l'élément d'indexation (360) et l'élément annulaire de commande (350), par rapport à un plan orthogonal à l'axe de rotation (311) de l'organe de contrôle est supérieure à l'inclinaison des faces principales (353, 354) de la liaison indexée entre l'élément annulaire de commande (350) et l'organe de contrôle (320) par rapport au même plan orthogonal à l'axe (311) de rotation.

16. Commutateur électrique selon la revendication 14, caractérisé par le fait que les différents dièdres (363) sont séparés par des faces planes (368) orthogonales à l'axe (311) de rotation de l'organe de contrôle (320).

17. Commutateur électrique selon la revendication 14, caractérisé par le fait que les différents dièdres (363) sont identiques entre eux.

18. Commutateur électrique selon les revendications 13 et 14 prises en combinaison, caractérisé par le fait que la moitié du débattement autorisé (L1) pour le doigt associé (327) entre les flancs (355, 356) des moyens définissant la liaison indexée est inférieure au débattement (L3) du doigt d'indexation (359) entre le point haut d'un dièdre d'indexation et le point bas du dièdre d'indexation adjacent.

19. Commutateur électrique selon la revendication 16, caractérisé par le fait que la moitié du débattement autorisé (L1) pour le doigt associé (327) entre les flancs (355, 356) des moyens définissant la liaison indexée est supérieure à l'ouverture (L2) desdites faces planes (368).

20. Commutateur électrique selon la revendication 16, caractérisé par le fait que la moitié du débattement autorisé (L1) pour le doigt associé (327) entre les flancs (355, 356) des moyens définissant la liaison indexée est de l'ordre de grandeur de l'ouverture (L2) desdites faces planes (368).

21. Commutateur électrique selon l'une des revendications 1 à 20, caractérisé par le fait que l'organe de commande (140, 240, 340) est guidé à rotation sur le boîtier (110, 210, 310) et qu'il porte un doigt (142, 242, 348) généralement radial par rapport à l'axe de rotation (311) et conçu pour déplacer un tiroir porte-contact.

22. Commutateur électrique selon la revendication 21, caractérisé par le fait que le tiroir porte au moins un pont de liaison (390) en matériau électriquement conducteur conçu pour relier sélectivement une lame de contact principale (391) à l'une de plusieurs lames de contact secondaires (392, 393, 394).

23. Commutateur électrique selon la revendication 22, caractérisé par le fait que les moyens d'entraînement du pont de liaison (390) sont choisis de sorte que lorsque les doigts d'indexation (359) sont déplacés du fond des rampes d'indexation (363) sur un sommet de celles-ci, le pont de liaison (390) soit déplacé sur une amplitude inférieure à la moitié de la largeur des lames secondaires (392, 393, 394).

24. Commutateur électrique selon l'une des revendications 22 ou 23, caractérisé par le fait que les moyens d'entraînement du pont de liaison (390) sont choisis de sorte que le pont de liaison (390) soit déplacé du milieu d'une lame secondaire (312) au milieu de la lame secondaire adjacente (393) lorsque les doigts d'indexage (359) sont déplacés d'une rampe d'indexation (363) à la rampe d'indexation adjacente.

25. Commutateur électrique selon l'une des revendications 22 ou 23 prise en combinaison avec la revendication 13, caractérisé par le fait que les moyens d'entraînement du pont de liaison (390) sont choisis de sorte que le pont de liaison (390) soit déplacé du milieu d'une lame secondaire (392) sur la lame secondaire adjacente (393) lorsque l'élément annulaire de commande (350) est entraîné à rotation sur une course angulaire égale à la moitié du débattement autorisé par les moyens (327, 352) définissant une liaison indexée.
